# FASCICULE DE BREVET EUROPEEN

(11) **EP 4 586 983 B1**
(45) Date de publication et mention de la délivrance du brevet: **02.09.2026**
(21) Numéro de dépôt: 23765497.5
(22) Date de dépôt: 06.09.2023
(51) Int. Cl.: A61G 5/10

(54) **SYSTÈME DE ROUE DE FAUTEUIL ROULANT**
ROLLSTUHLRADSYSTEM
WHEELCHAIR WHEEL SYSTEM

(30) Priorité: 13.09.2022 FR 2209202
(43) Date de publication de la demande: 23.07.2025
(73) Titulaire: EPPUR, 59120 LOOS (FR)
(72) Inventeur: GALLOIS, Colin, 75010 PARIS (FR); DURAND, Lancelot, 59800 LILLE (FR); PORTELLANO, Matthias, 33400 Talence (FR)
(74) Mandataire: Cabinet Beau de Loménie
(86) Numéro de dépôt international: PCT/EP2023/074393
(87) Numéro de publication internationale: WO 2024/056478

(56) Documents cités:
- WO-A1-2019/193277

## Description

### Domaine technique

La présente invention concerne le domaine technique des fauteuils roulants et plus précisément le domaine des systèmes de roue pour de tels fauteuils roulants. Les systèmes de roues comprennent traditionnellement une roue ayant un moyeu et un mécanisme d'entrainement de cette roue par rapport au cadre du fauteuil roulant.

La présente invention concerne notamment les systèmes de roue comprenant une main courante couplée à la roue et permettant d'entrainer la roue en rotation en marche avant, en marche arrière mais également de réaliser le freinage de la roue.

### Technique antérieure

On connait un fauteuil roulant muni d'un système de roue tel que celui décrit dans le document WO2019193277. Le système de roue de ce document comprend une première portion d'arbre sur laquelle est montée une portion d'extension de la main courante coopérant avec un organe de couplage mobile en translation axial. L'organe de couplage permet de coupler en rotation la roue et la main courante lorsqu'il est placé dans une première position, pour l'entrainement de la roue en marche avant. L'organe de couplage peut également prendre une deuxième position dans laquelle il pousse radialement un patin de freinage contre le moyeu, permettant le freinage de la roue mais également l'entrainement en marche arrière de la roue.

Un inconvénient de ce système de roue est qu'il comprend deux portions d'arbres mobiles en rotation l'une par rapport à l'autre. La première portion d'arbre est configurée pour être montée au cadre du fauteuil de manière pivotante, par l'intermédiaire d'une roue libre ayant une bague intérieure solidaire d'une seconde portion d'arbre fixée au cadre. Le degré de liberté existant entre les premières et deuxièmes portions d'arbre risque de générer un jeu important, notamment dans le débattement angulaire de la main courante, mais également dans le déplacement axial de l'organe de couplage, qui n'est pas souhaitable. Compte-tenu de ce jeu résiduel, l'utilisateur peut être tenu de faire pivoter la main courante à vide selon un débattement angulaire relativement important avant que cette dernière n'entraine la roue en marche avant où que le freinage de la roue ne s'opère. Ce débattement angulaire à vide de la main courante réduit la maniabilité du système de roue et donne à l'utilisateur un sentiment d'insécurité, dans la mesure où le freinage du fauteuil n'est pas immédiat.

En outre, la portion d'extension de la main courante de ce système de roue est montée directement sur la première portion d'arbre par l'intermédiaire d'un roulement. De même, la bague intérieure de la roue libre est fixée directement à la deuxième portion d'arbre. De plus, la deuxième portion d'arbre est bloquée en rotation par rapport au cadre par l'intermédiaire d'une pièce de blocage montée directement sur la deuxième portion d'arbre. Autrement dit, une solution de montage distincte est retenue pour le montage respectif de la portion d'extension de la main courante, de la bague intérieure de la roue libre et de la pièce de blocage sur les portions d'arbre principal.

Le montage de ces différents éléments directement sur les première et deuxième portions d'arbre peut s'avérer difficile et nécessite d'adapter ces portions d'arbre en vue du montage, en y ménageant notamment des gorges, encoches, méplats et/ou en y associant des moyens de montage spécifiques à chacun de ces éléments.

En outre, le système de roue selon l'art antérieur rend les portions d'arbre difficiles d'accès. En particulier, il est nécessaire de démonter sensiblement l'ensemble du système de roue pour procéder au remplacement de ces portions d'arbre.

### Exposé de l'invention

Un but de la présente invention est de proposer un système de roue remédiant aux inconvénients précités.

Pour ce faire, l'invention porte sur un système de roue de fauteuil roulant ayant un cadre, le système de roue comprenant :
- une roue ayant un moyeu présentant un axe principal, le moyeu comprenant une face interne munie d'une surface conique interne;
- un arbre principal configuré pour être monté au cadre du fauteuil roulant ;
- un élément tubulaire s'étendant selon l'axe principal, l'arbre principal étant engagé dans ledit élément tubulaire;
- une main courante montée pivotante autour de l'axe principal par rapport à l'élément tubulaire et couplée à la roue pour l'entrainement en rotation et le freinage de la roue, la main courante comprenant une portion d'actionnement circulaire et une portion d'extension s'étendant dans le moyeu, ladite portion d'extension entourant l'élément tubulaire et présentant une partie filetée ;
- au moins un patin de freinage situé dans le moyeu et comprenant une surface de freinage et au moins une première surface conique;
- un organe de couplage comprenant une surface de couplage, une rampe et une portion filetée engagée avec la partie filetée de la portion d'extension de la main courante pour déplacer axialement l'organe de couplage par rapport au moyeu, l'organe de couplage étant mobile en translation axiale entre au moins une première position dans laquelle sa surface de couplage est en appui contre la surface conique interne du moyeu, de sorte à lier en rotation la main courante et le moyeu, et une deuxième position dans laquelle la rampe de l'organe de couplage appuie contre la première surface conique du patin de freinage pour pousser radialement le patin de freinage contre la face interne du moyeu;
- une roue libre comprenant une bague intérieure fixe par rapport à l'élément tubulaire et une bague extérieure bloquée en rotation par rapport à la bague intérieure dans un premier sens de rotation et libre en rotation par rapport à la bague intérieure dans un second sens de rotation opposé au premier sens de rotation, le moyeu de la roue étant monté pivotant par rapport à la bague extérieure de la roue libre, le patin de freinage étant lié en rotation avec la bague extérieure de la roue libre lorsque l'organe de couplage est dans la deuxième position ; et
- une pièce de blocage solidaire de l'élément tubulaire et située à l'opposé de la main courante, la pièce de blocage étant configurée pour coopérer avec un élément de blocage du cadre.

La roue comprend avantageusement une jante reliée au moyeu, par exemple par l'intermédiaire de rayons. La roue comprend avantageusement un pneu monté sur ladite jante.

L'arbre principal s'étend de préférence selon l'axe principal. L'arbre principal s'étend au moins en partie à l'intérieur de l'élément tubulaire. L'arbre principal est de préférence de forme cylindrique. L'élément tubulaire présente avantageusement la forme d'un manchon. L'élément tubulaire est creux. De préférence, l'arbre principal traverse ledit élément tubulaire. L'arbre principal est de préférence formé d'une seule et même pièce. L'élément tubulaire et l'arbre principal sont de préférence coaxiaux.

L'élément tubulaire présente avantageusement une longueur inférieure à la longueur de l'arbre principal, de préférence, une longueur inférieure aux deux tiers de la longueur de l'arbre principal. L'élément tubulaire présente avantageusement une longueur sensiblement égale à la longueur du moyeu considérée selon l'axe principal. L'élément tubulaire s'étend de préférence essentiellement à l'intérieur du moyeu.

Sans sortir du cadre de l'invention, l'élément tubulaire peut être bloqué en rotation par rapport à l'arbre principal.

De préférence, l'élément tubulaire est bloqué en translation axiale par rapport à l'arbre principal.

De préférence, l'élément tubulaire est bloqué en translation axiale par rapport à l'arbre principal lorsque l'arbre principal est monté au cadre du fauteuil roulant.

L'arbre principal comprend de préférence un écrou, fixé à l'extrémité de l'arbre principal, sur lequel vient en butée l'élément tubulaire pour le blocage en translation axiale de l'élément tubulaire par rapport à l'arbre principal dans un sens de déplacement axial.

De préférence, l'élément tubulaire ou la pièce de blocage est configuré(e) pour venir en butée contre une portion du cadre pour le blocage en translation axiale de l'élément tubulaire par rapport à l'arbre principal dans un autre sens de déplacement axial.

L'arbre principal est de préférence configuré pour être monté de manière amovible au cadre du fauteuil roulant.

De préférence, le système de roue comprend au moins une bague disposée entre l'arbre principal et l'élément tubulaire. Cette bague est de préférence emmanchée sur l'arbre principal et prend appui sur un épaulement formé à l'intérieur de l'élément tubulaire. Cette bague permet le montage de l'arbre principal à l'intérieur de l'élément tubulaire. La taille de la bague est choisie en fonction du diamètre de l'arbre principal.

L'arbre principal est avantageusement configuré pour s'étendre à l'intérieur d'une portion de montage, par exemple un canon d'axe, du cadre du fauteuil roulant, lorsqu'il est monté audit cadre. De préférence, l'arbre principal est configuré pour être bloqué en translation axiale par rapport au cadre du fauteuil roulant lorsqu'il est monté à ce dernier. Lorsqu'il est monté au cadre du fauteuil roulant, ledit arbre principal peut être libre en rotation autour de l'axe principal par rapport audit cadre.

L'élément tubulaire du système de roue selon l'invention constitue une pièce de montage intermédiaire pour le montage notamment de la bague intérieure de la roue libre, de la portion d'extension de la main courante et de la pièce de blocage. Grâce à l'invention, la bague intérieure de la roue libre, la portion d'extension de la main courante et de la pièce de blocage ne sont pas montées directement sur l'arbre principal. Il n'est donc pas nécessaire de modifier l'arbre principal et de l'adapter pour le montage de ces éléments. Le montage de la roue libre, de la main courante et de la pièce de blocage est donc facilité. L'invention permet en outre d'utiliser un arbre principal standard, disponible dans le commerce et s'adaptant à tous types de fauteuils roulants.

Le système de roue selon l'invention peut par conséquent être monté et assemblé à de nombreux fauteuils, sans modification substantielle du système de roue, dans la mesure où, au sein du système de roue, seul l'arbre principal doit être choisi et adapté en fonction du cadre du fauteuil roulant. Un connecteur peut en outre être associé au cadre du fauteuil roulant, solidaire de l'élément de blocage, par exemple pour le blocage en rotation de l'élément tubulaire par rapport au cadre. Ce connecteur est de préférence fixé au cadre.

L'élément tubulaire du système de roue selon l'invention permet de libérer l'arbre principal par rapport au moyeu en le désengageant dudit élément tubulaire. Il n'est pas nécessaire de démonter les autres pièces et éléments composant le système de roue pour changer et remplacer l'arbre principal.

Par ailleurs, le système de roue selon l'invention permet l'utilisation d'un unique arbre principal bloqué en translation par rapport au cadre, contrairement aux systèmes de roue selon l'art antérieur qui prévoient l'utilisation de deux portions d'arbre distinctes. En particulier, grâce à l'invention, la bague intérieure de la roue libre est fixe par rapport au cadre du fauteuil roulant. Un intérêt est de réduire le jeu au sein du système de roue en réduisant le nombre de pièces et donc le nombre de degrés de liberté entre les pièces composant le système de roue.

Le moyeu est de préférence monté pivotant par rapport à la bague extérieure de la roue libre autour de l'axe principal. Le système de roue comprend de préférence un palier extérieur, par exemple un roulement à billes, disposé entre la bague extérieure de la roue libre et la face interne du moyeu. Avantageusement, la roue libre est une roue libre à cames.

La roue libre est de préférence située entre la portion d'extension de la main courante et la pièce de blocage.

De préférence, le système de roue comprend deux patins de freinage. Les patins de freinage s'étendent de préférence de part et d'autre de l'élément tubulaire.

Dans le premier sens de rotation, la bague extérieure de la roue libre est bloquée en rotation par rapport à la bague intérieure, alors que dans le second sens de rotation, la bague extérieure est libre en rotation par rapport à la bague intérieure. Aussi, lorsque le patin de freinage est couplé en rotation avec la bague extérieure de la roue libre, il est par conséquent bloqué en rotation par rapport à la bague intérieure de la roue libre, et donc par rapport à l'élément tubulaire, dans le premier sens de rotation et libre en rotation par rapport à la bague intérieure, et donc à l'élément tubulaire, dans le second sens de rotation.

De préférence, le patin de freinage est couplé en rotation avec la bague extérieure de la roue libre autour de l'axe principal, quelle que soit la position de l'organe de couplage.

Selon une première alternative non limitative, le patin de freinage peut coopérer directement avec la bague extérieure de la roue libre. Selon une autre alternative non limitative, le patin de freinage peut coopérer avec un bouchon solidaire de la bague extérieure de la roue libre.

De préférence, la portion d'actionnement circulaire de la main courante s'étend radialement par rapport à l'élément tubulaire et à l'arbre principal. L'utilisateur fait avantageusement pivoter la main courante en entrainant en rotation ladite portion d'actionnement circulaire. La portion d'actionnement circulaire de la main courante est avantageusement munie de poignées.

De préférence, la portion d'actionnement circulaire est solidaire de la portion d'extension de la main courante. De préférence, la portion d'actionnement circulaire et la portion d'extension de la main courante sont deux pièces distinctes solidarisées entre elles, par exemple au moyen de vis. Sans sortir du cadre de l'invention, la portion d'actionnement circulaire et la portion d'extension de la main courante peuvent être une seule et même pièce.

L'organe de couplage est avantageusement en liaison hélicoïdale avec la portion d'extension de la main courante. La portion filetée de l'organe de couplage est avantageusement une portion taraudée dont le taraudage est configuré pour coopérer avec le filetage de la partie filetée de la portion d'extension. La surface de couplage de l'organe de couplage est avantageusement une surface conique. Elle est avantageusement inclinée par rapport à l'axe principal, considérée dans un plan de coupe longitudinal.

De préférence, le patin de freinage présente la forme d'une portion de cylindre. Le patin de freinage est avantageusement disposé entre le moyeu, l'organe de couplage et un bouchon. Avantageusement, le système de roue comprend deux patins disposés de part et d'autre de l'élément tubulaire et diamétralement opposés.

De préférence, la pièce de blocage est fixée à une extrémité de l'élément tubulaire. La pièce de blocage et la portion d'actionnement circulaire de la main courante s'étendent de préférence de part et d'autre du moyeu.

Sans sortir du cadre de l'invention, la pièce de blocage et l'élément tubulaire peuvent ne former qu'une seule et même pièce.

De préférence, la pièce de blocage est configurée pour coopérer avec l'élément de blocage du cadre pour le blocage en rotation de l'élément tubulaire par rapport au cadre.

La pièce de blocage coopère avantageusement avec l'élément de blocage du cadre pour le blocage en rotation de l'élément tubulaire par rapport au cadre dans au moins un sens de rotation.

De manière non limitative, et sans sortir du cadre de l'invention, la pièce de blocage peut coopérer avec l'élément de blocage du cadre pour le blocage en rotation de l'élément tubulaire par rapport au cadre dans les deux sens de rotation.

De manière non limitative, l'élément de blocage peut être une portion du cadre du fauteuil roulant, par exemple une portion d'armature tubulaire s'étendant radialement par rapport à l'axe principal de la roue lorsque cette dernière est montée au cadre.

Le pivotement de la main courante dans un premier sens de rotation, correspondant à un sens de rotation de la roue pour le déplacement en marche avant du fauteuil roulant, entraine le déplacement en translation axiale de l'organe de couplage dans un premier sens de déplacement, vers la surface conique de la face interne du moyeu, jusqu'à amener ledit organe de couplage dans la première position.

Dans cette première position, la surface de couplage de l'organe de couplage vient en butée contre la surface conique de la face interne du moyeu, de sorte que le déplacement axial de l'organe de couplage est interrompu. Dès lors, la main courante et le moyeu sont couplés en rotation autour de l'axe principal, dans le premier sens de rotation. Dans la première position, la main courante entraine le moyeu dans le premier sens de rotation. Le pivotement de la main courante dans le premier sens de rotation entraine le déplacement de la roue dans ce même premier sens de rotation, correspondant à un déplacement vers l'avant du fauteuil. Dans ce premier sens de rotation du moyeu, la bague extérieure de la roue libre est bloquée en rotation par rapport à la bague intérieure. Le moyeu étant monté pivotant par rapport à la bague extérieure de la roue libre, la roue peut toutefois pivoter par rapport à la roue libre et donc à l'élément tubulaire autour de l'axe principal.

Depuis cette première position, lorsque l'utilisateur cesse de faire pivoter la main courante, l'organe de couplage se déplace légèrement axialement dans un second sens de déplacement, opposé au premier sens de déplacement. Ce second sens de déplacement correspond à un déplacement opposé à la surface conique de la face interne du moyeu, dirigé vers le patin de freinage. Compte-tenu de ce léger déplacement axial, la surface de couplage de l'organe de couplage n'est plus en appui contre la surface conique de la face interne du moyeu et le couplage entre la main courante et la roue est interrompu. La roue poursuit toutefois son pivotement dans le premier sens de rotation, permettant au fauteuil d'avancer.

De préférence, lorsque l'organe de couplage est dans la première position, la distance entre la rampe de l'organe de couplage et la première surface conique du patin de freinage est inférieure à 2 millimètres, de préférence inférieure à un millimètre.

Afin de réaliser le freinage de la roue, l'utilisateur fait pivoter la main courante dans un second sens de rotation opposé au premier sens de rotation. Ce second sens de rotation correspond à un sens de freinage ou encore à un sens de déplacement en marche arrière pour le fauteuil.

L'organe de couplage est entrainé en translation axiale par la portion d'extension de la main courante et se déplace axialement dans le second sens de déplacement, vers le patin de freinage. De préférence, dans le second sens de déplacement, l'organe de couplage est déplacé vers la roue libre.

L'organe de couplage est déplacé jusqu'à atteindre la deuxième position, dans laquelle sa rampe appuie contre la première surface conique du patin de freinage. L'organe de couplage pousse alors le patin de freinage qui est déplacé radialement vers la surface interne du moyeu. La surface de freinage du patin de freinage vient alors en appui contre la surface intérieure du moyeu, réalisant ainsi le freinage de la roue.

Autrement dit, le pivotement de la main courante dans le second sens de rotation entraine le freinage de la roue, ralentissant son pivotement par rapport au cadre du fauteuil roulant.

Lors du freinage, pendant la phase de ralentissement et jusqu'à son arrêt complet, la roue continue de tourner dans le premier sens de rotation correspondant à un déplacement vers l'avant du fauteuil. Dans ce premier sens de rotation, et donc lors du freinage, la bague extérieure de la roue libre est bloquée en rotation par rapport à la bague intérieure de la roue libre. La roue peut toutefois pivoter compte-tenu de la liaison pivot entre le moyeu et la bague extérieure de la roue libre.

De préférence, le système de roue comprend un bouchon solidaire de la bague extérieure de la roue libre, le patin de freinage étant mobile en translation par rapport audit bouchon. Le patin de freinage est avantageusement bloqué en rotation par rapport au bouchon. De préférence, le bouchon comprend un logement dans lequel est disposée la roue libre. On comprend que le bouchon permet de coupler en rotation le patin de freinage par rapport à la bague extérieure de la roue libre.

De préférence, le patin de freinage comprend en outre une deuxième surface conique, inclinée par rapport à la première surface conique. Le bouchon présente avantageusement une surface de bouchon conique, la deuxième surface conique du patin de freinage étant configurée pour venir en appui contre ladite surface de bouchon conique lorsque l'organe de couplage est dans la deuxième position. On comprend que lorsque l'organe de couplage est dans la deuxième position, le patin de freinage est pris en sandwich entre le bouchon et l'organe de couplage.

Lorsque la roue pivote dans le premier sens de rotation et donc notamment lors du freinage, le bouchon et le patin de freinage sont bloqués en rotation par rapport à l'élément tubulaire, compte-tenu du blocage en rotation de la bague extérieure de la roue libre.

Pour faire pivoter la roue dans le second sens de rotation, correspondant à un déplacement en marche arrière du fauteuil, l'utilisateur fait également pivoter la main courante dans ce second sens de rotation. En conséquence, l'organe de couplage est amené dans la deuxième position dans laquelle pousse le patin de freinage de manière à le déplacer radialement. La surface de freinage du patin de freinage est pressée contre la face interne du moyeu, générant ainsi un couplage entre la main courante et le moyeu dans ce second sens de rotation, par l'intermédiaire du patin de freinage et de l'organe de couplage. Dans ce second sens de rotation du moyeu, la bague extérieure de la roue libre est libre en rotation par rapport à la bague intérieure. Le pivotement du moyeu dans le second sens de rotation est autorisé par le couplage en rotation du patin de freinage avec la bague extérieure de la roue libre, qui est elle-même libre en rotation par rapport à la bague intérieure de la roue libre dans ce second sens de rotation.

Dans cette deuxième position de l'organe de couplage, le bouchon est également couplé au patin de freinage et au moyeu. Le bouchon et le patin de freinage pivotent également dans ce second sens de rotation.

Un déplacement de la main courante dans un second sens de rotation entraine le déplacement en rotation de la roue dans ce second sens de rotation, correspondant à un déplacement en marche arrière du fauteuil.

De préférence, entre la première position et la deuxième position, l'organe de couplage se déplace axialement d'une distance inférieure à 2 millimètres, encore de préférence inférieure à un millimètre.

De préférence, lorsque l'organe de couplage est dans la deuxième position, la distance entre la surface de couplage de l'organe de couplage et la surface conique interne de la face interne du moyeu est inférieure à 2 millimètres, de préférence inférieure à un millimètre. De préférence, le système de roue est conformé de sorte que la distance entre la surface de couplage de l'organe de couplage et la surface conique interne de la face interne du moyeu, lorsque l'organe de couplage est dans la deuxième position, soit la plus courte possible sans pour autant générer de contact entre ces deux surfaces.

De préférence, l'arbre principal est muni d'un écrou de réglage configuré pour venir en appui sur une extrémité de l'élément tubulaire. Cet écrou de réglage permet d'ajuster la position axiale du bouchon et donc de régler la distance entre le bouchon et l'organe de couplage. Ceci permet d'ajuster la distance entre la rampe de l'organe de couplage et la première surface conique du patin de freinage mais également la distance entre la surface de couplage de l'organe de couplage et la surface conique interne de la face interne du moyeu.

De préférence, le système de roue comprend au moins un premier palier situé à l'intérieur du moyeu et disposé entre ladite partie filetée de la portion d'extension de la main courante et ledit élément tubulaire. On comprend que le premier palier est situé dans un volume intérieur défini par le moyeu. Un intérêt est d'améliorer le maintien radial et latéral de la portion d'extension de la main courante, notamment au niveau de la partie filetée de la portion d'extension de la main courante, qui est soumise à des efforts importants compte-tenu de la coopération entre ladite portion d'extension et l'organe de couplage et notamment du bras de levier formé par la portion d'extension de la main courante, qui est soumise à des efforts importants dans toutes les directions. Le premier palier permet d'éviter le rotulage entre la main courante et la roue. Le premier palier comprend de préférence un roulement à billes. Le premier palier permet de réaliser un centrage long de la portion d'extension de la main courante.

Avantageusement, la portion d'extension de la main courante comprend une partie cylindrique située entre la partie filetée et la portion d'actionnement circulaire, le système de roue comprenant en outre un deuxième palier disposé entre ladite partie cylindrique de la portion d'extension et ledit élément tubulaire. Un intérêt est d'améliorer encore le maintien radial et latéral de la portion d'extension et limiter d'autant plus efficacement le rotulage entre la main courante et la roue. Un autre intérêt est d'assurer la coaxialité entre la portion d'extension et l'élément tubulaire, en plus d'assurer le guidage en rotation de ladite portion d'extension.

Le deuxième palier comprend avantageusement un roulement à billes.

Préférentiellement, le système de roue comprend en outre un palier extérieur disposé entre la bague extérieure de la roue libre et le moyeu. Un intérêt est de guider le pivotement du moyeu par rapport à la l'élément tubulaire et d'améliorer le maintien radial et axial du moyeu afin de maintenir l'inclinaison de la roue constante et afin d'éviter le rotulage entre la main courante et la roue.

Alternativement, et sans sortir du cadre de l'invention, le système de roue peut comprendre un palier extérieur disposé entre un bouchon solidaire de la bague extérieure de la roue libre et le moyeu.

Le palier extérieur comprend de préférence un roulement à billes.

De préférence, le système de roue comprend en outre un palier extérieur disposé entre la portion d'extension de la main courante et le moyeu.

De manière avantageuse, la pièce de blocage présente la forme générale d'un disque, une pluralité d'orifices étant ménagés dans le disque et disposés sur le pourtour d'un cercle centré sur le centre du disque. Un intérêt est de faciliter la mise en coopération entre l'élément de blocage et la pièce de blocage, tout en réduisant le poids de ladite pièce de blocage.

L'élément de blocage comprend de préférence un pion de blocage configuré pour coopérer avec l'un quelconque des orifices de la pièce de blocage.

Lesdits orifices de la pièce de blocage sont de préférence de forme oblongue, afin de faciliter encore la mise en coopération entre l'élément de blocage et la pièce de blocage. En particulier, lors de la mise en coopération, cette forme oblongue autorise une marge de tolérance importante quant à la position radiale de l'élément de blocage par rapport à l'axe principal, sans pour autant augmenter significativement le jeu entre l'élément de blocage et la pièce de blocage une fois assemblés.

Préférentiellement, ladite pièce de blocage présente une face latérale configurée pour venir en butée sur une portion du cadre lorsque l'arbre principal est monté audit cadre. Un intérêt est de bloquer la translation axiale du système de roue par rapport au cadre du vélo, dirigé vers le cadre. Autrement dit, la face latérale de la pièce de blocage limite le déplacement du système de roue lors du montage de l'arbre principal sur le cadre.

La pièce de blocage vient de préférence en butée sur un canon d'axe du cadre du fauteuil roulant.

De préférence, l'arbre principal comprend en outre au moins un élément de butée configuré pour venir en butée contre une portion du cadre du fauteuil roulant. L'élément de butée permet de bloquer le déplacement axial de l'arbre principal dans un sens opposé audit cadre. L'élément de butée comprend de préférence au moins une bille. L'élément de butée bloque de préférence le déplacement axial du système de roue dans un premier sens de montage tandis que la face latérale de la pièce de blocage bloque de préférence le déplacement axial du système de roue dans un second sens de montage, opposé au premier sens de montage.

Avantageusement, la distance entre la face latérale de la pièce de blocage et l'élément de butée est sensiblement égale à la largeur de la portion de montage du cadre, par exemple du canon d'axe, au sein de laquelle s'étend l'arbre principal. De préférence, la portion de montage du cadre est prise en sandwich entre la face latérale de la pièce de blocage et l'élément de butée de l'arbre principal.

Selon un aspect particulièrement avantageux, le système de roue comprend en outre une pièce de frottement disposée entre la main courante et la roue et configurée pour générer un couple de frottement entre ladite main courante et la roue lors du pivotement de ladite roue. Un intérêt est d'entrainer la main courante en rotation autour de l'axe principal lors du pivotement de la roue et du moyeu autour de ce même axe principal. Dès lors, la main courante suit le mouvement de rotation de la roue. Ceci permet notamment d'éviter que la main courante ne reste immobile lorsque la roue est entrainée en rotation.

Par conséquent, lorsque la roue pivote dans le premier sens de rotation, correspondant à un déplacement en marche avant du fauteuil roulant, la main courante est également entrainée en rotation dans ce premier sens de rotation. La surface de couplage de l'organe de couplage tend à venir en butée contre la surface conique interne de la face interne du moyeu. Aussi, la main courante ne reste pas immobile lors du pivotement de la roue. Un intérêt est de réduire l'amplitude de la poussée que doit exercer l'utilisateur sur la main courante afin d'amener l'organe de couplage en première position pour le couplage du moyeu et de la main courante.

De même, lorsque la roue pivote dans le second sens de rotation, correspondant à un déplacement en marche arrière du fauteuil roulant, la main courante est également entrainée en rotation dans ce second sens de rotation. La rampe de l'organe de couplage tend à venir en butée contre la première surface conique du patin de freinage. Un intérêt est de réduire l'amplitude de la poussée que doit exercer l'utilisateur sur la main courante afin d'amener l'organe de couplage en deuxième position pour le couplage du moyeu et de la main courante via le patin de freinage.

Autrement dit, la pièce de frottement permet de réduire l'amplitude de la poussée à exercer sur la main courante menant au couplage de la main courante et du moyeu et donc à l'entrainement en rotation de la roue. Une poussée sur la main courante se traduit par un entrainement en rotation presque immédiat de la roue. La maniabilité du fauteuil ainsi que la sécurité de l'utilisateur sont améliorées.

Avantageusement, la pièce de frottement est disposée entre la portion d'extension de la main courante et le moyeu. La pièce de frottement est de préférence disposée à l'intérieur du moyeu. La pièce de frottement peut être fixée au moyeu ou à la main courante.

De préférence, ladite pièce de frottement comprend un joint, par exemple un joint à lèvre, également appelé joint SPI. Ledit joint comprend avantageusement une lèvre souple configurée pour générer un couple de frottement entre la main courante et le moyeu.

Préférentiellement, le système de roue comprend en outre un élément de guidage axial monté pivotant autour de l'élément tubulaire, l'organe de couplage étant mobile en translation selon l'axe principal par rapport audit élément de guidage axial tout en étant bloqué en rotation autour de l'axe principal par rapport à cet élément de guidage axial, l'élément de guidage axial comprenant une portion de frottement coopérant avec l'élément tubulaire et configurée pour exercer un couple de frottement sur ledit élément tubulaire.

Le couple de frottement exercé par l'élément de guidage axial tend à s'opposer au pivotement dudit élément de guidage axial, et donc de l'organe de couplage, autour de l'axe principal. L'élément de guidage axial est avantageusement configuré pour empêcher le pivotement de l'organe de couplage lorsque ce dernier est amené de la première position à la deuxième position et inversement. L'élément de guidage axial est avantageusement configuré pour autoriser le pivotement de l'organe de couplage autour de l'axe principal lorsque ce dernier est dans la première position ou dans la deuxième position.

Un intérêt est de réduire le jeu pouvant apparaitre lorsque l'organe de couplage passe de la première à la deuxième position et inversement, en supprimant un degré de liberté, à savoir le degré de rotation de l'organe de couplage autour de l'axe principal. Autrement dit, un intérêt est d'empêcher la rotation de l'organe de couplage lorsqu'il se déplace axialement entre la première et la deuxième position, limitant ainsi le débattement angulaire à vide de la main courante.

De préférence, ladite portion de frottement est déformable et est configurée pour empêcher le pivotement de l'organe de couplage par rapport à l'élément tubulaire lorsque ledit organe de couplage est soumis à un couple inférieur à un seuil prédéterminé. La portion de frottement est avantageusement configurée pour autoriser le pivotement de l'organe de couplage par rapport à l'élément tubulaire lorsque ledit organe de couplage est soumis à un couple supérieur à ce seuil prédéterminé. La valeur de ce seuil prédéterminé est de préférence inférieure à 1 Newton mètre (Nm), de préférence environ égale à 0,2 Nm. Autrement dit, lorsque le couple exercé sur l'organe de couplage est inférieur à la valeur de ce seuil prédéterminé, l'organe de couplage est en liaison glissière par rapport à l'élément tubulaire. Lorsque le couple exercé sur l'organe de couplage est supérieur à la valeur de ce seuil, l'organe de couplage est en liaison pivot glissant par rapport à l'élément tubulaire. La valeur de ce seuil prédéterminé est avantageusement choisie la plus faible possible, pour que le couple de frottement soit sensiblement imperceptible lors du pivotement de l'organe de couplage, mais suffisamment élevée pour empêcher le pivotement de l'organe de couplage par rapport à l'élément tubulaire lors du déplacement axial de l'organe de couplage.

Préférentiellement, ladite portion de frottement comprend un joint, par exemple un joint à lèvre, emmanché sur l'élément tubulaire. Ladite portion de frottement comprend avantageusement une lèvre intérieure souple emmanchée sur l'élément tubulaire.

De manière avantageuse, ledit organe de couplage comprend au moins une portion d'engagement et ledit élément de guidage axial comprend au moins une rainure configurée pour recevoir ladite portion d'engagement, ladite portion d'engagement étant configurée pour coulisser axialement à l'intérieur de ladite rainure.

Alternativement, et toujours de manière avantageuse, ledit organe de couplage comprend au moins une rainure et ledit élément de guidage axial comprend au moins une portion d'engagement configurée pour s'engager avec ladite rainure, ladite portion d'engagement étant configurée pour coulisser axialement à l'intérieur de ladite rainure.

Ladite au moins une portion d'engagement comprend de préférence une cannelure.

Préférentiellement, l'arbre principal comprend un dispositif de montage rapide pour le montage, de manière amovible, du système de roue par rapport audit cadre du fauteuil roulant. Le dispositif de montage permet le montage et le démontage rapide du système de roue par rapport au cadre.

Le dispositif de montage rapide comprend avantageusement au moins une bille disposée dans une cavité formée dans l'arbre principal et une tige configurée pour s'étendre axialement à l'intérieur de l'arbre principal. Ladite tige comprend avantageusement une portion de poussée configurée pour pousser sur ladite bille afin de la déplacer radialement lorsque ladite tige est insérée dans l'arbre principal. La bille est alors amenée dans une position déployée dans laquelle elle fait saillie radialement depuis la surface extérieure de l'arbre principal. Ladite bille forme alors une butée bloquant le déplacement axial de l'arbre principal par rapport au cadre du fauteuil roulant.

Le dispositif de montage rapide permet avantageusement de monter le système de roue au cadre du fauteuil roulant sans outil.

Selon une variante avantageuse, la pièce de blocage comprend une bielle s'étendant radialement par rapport à l'élément tubulaire et un doigt de blocage s'étendant transversalement à ladite bielle, ledit doigt de blocage étant configuré pour coopérer avec ledit élément de blocage du cadre. Un intérêt est de proposer une pièce de blocage légère, peu encombrante et dont la fabrication est facilitée.

Un autre intérêt est de faciliter le montage du système de roue sur le cadre du fauteuil roulant dans la mesure il n'est pas nécessaire de prêter attention à la position relative de la pièce de blocage et de l'élément de blocage du cadre lors dudit montage

En outre, cette configuration particulière de la pièce de blocage confère une meilleure adaptabilité dans la mesure où elle permet de monter le système de roue sur une très grande variété de fauteuils. En effet, la plupart des fauteuils disposent d'une portion d'armature apte à former un élément de blocage pour la pièce de blocage.

Dans cette variante, l'élément de blocage est avantageusement formé par une portion du cadre du fauteuil roulant, par exemple une portion d'armature supportant le siège du fauteuil.

Le doigt de blocage est avantageusement configuré pour venir en appui contre ledit élément de blocage.

Le doigt de blocage s'étend avantageusement depuis une extrémité distale de la bielle. Le doigt de blocage s'étend avantageusement perpendiculairement à ladite bielle.

Dans ce mode de réalisation, on comprend que le doigt de blocage est configuré pour venir en appui contre l'élément de blocage du cadre pour bloquer la rotation de la pièce de blocage, et donc de l'élément tubulaire, par rapport au cadre du fauteuil roulant dans un seul sens de rotation, correspondant au sens de rotation de la roue en marche avant.

De manière non limitative, dans cette variante, l'élément de blocage du cadre ne bloque pas la rotation de la pièce de blocage par rapport au cadre dans un sens de rotation correspondant au sens de rotation de la roue en marche arrière, ou à tout le moins pas immédiatement.

Lors du freinage, la roue tourne dans le premier sens de rotation correspondant à un déplacement vers l'avant du fauteuil. Dans ce premier sens de rotation, et donc lors du freinage, la bague extérieure de la roue libre est bloquée en rotation par rapport à la bague intérieure de la roue libre. Par conséquent, l'élément tubulaire tend à pivoter dans ledit premier sens de rotation, entrainé par la roue-libre et la roue du fauteuil. La pièce de blocage prend alors appui sur l'élément de blocage du cadre et permet de bloquer la rotation de l'élément tubulaire dans ledit premier sens de rotation. La roue libre est donc également bloquée en rotation dans ce premier sens de rotation. Le freinage peut être réalisé comme détaillé précédemment, en faisant pivoter la main courante.

De manière non limitative, lors d'une première utilisation, la pièce de blocage, et notamment le doigt de blocage, ne sont pas nécessairement en contact avec l'élément de blocage du cadre. Lors du premier freinage réalisé, la pièce de blocage pivote dans le premier sens de rotation, correspondant au sens de rotation de la roue lors d'un déplacement vers l'avant du fauteuil, jusqu'à venir en appui contre l'élément de blocage du cadre. De manière non limitative, la pièce de blocage reste alors sensiblement au contact de l'élément de blocage du cadre et est donc bloquée en rotation dans ledit premier sens de rotation.

L'invention porte également sur un fauteuil roulant ayant un cadre et comprenant au moins un système de roue tel que décrit précédemment, ledit arbre principal étant monté au cadre du fauteuil roulant pour le montage du système de roue audit cadre, le cadre comprenant au moins un élément de blocage et la pièce de blocage coopérant avec ledit élément de blocage du cadre. Ledit système de roue est de préférence monté de manière amovible au cadre du fauteuil roulant.

De préférence, la pièce de blocage coopère avec l'élément de blocage du cadre pour le blocage en rotation de l'élément tubulaire du système de roue par rapport au cadre.

De préférence, le cadre du fauteuil roulant comprend un connecteur fixé audit cadre et duquel est solidaire l'élément de blocage. Le connecteur est choisi de manière adaptée par rapport au cadre.

Le connecteur est de préférence une pièce rapportée fixée au cadre, par exemple au moyen d'une vis.

Selon une première variante avantageuse, la pièce de blocage comprend au moins un orifice, et l'élément de blocage comprend un pion de blocage s'étendant radialement à distance de l'arbre principal et coopérant avec ledit orifice de la pièce de blocage pour le blocage en rotation de l'élément tubulaire par rapport au cadre.

De manière non limitative, le pion de blocage peut être incliné par rapport à l'axe principal lorsque le système de roue est monté au cadre, notamment lorsque la roue est inclinée par rapport à la verticale selon un angle de carrossage.

Selon une autre variante avantageuse, et sans sortir du cadre de l'invention, le cadre comprend avantageusement au moins un orifice, et la pièce de blocage comprendre avantageusement un pion de blocage s'étendant radialement à distance de l'arbre principal et coopérant avec ledit orifice du cadre pour le blocage en rotation de l'élément tubulaire par rapport au cadre.

De préférence, le pion de blocage comprend une portion sphérique s'engageant avec ledit au moins un orifice de la pièce de blocage. Autrement dit, le pion de blocage est en liaison rotule avec la pièce de blocage.

Un intérêt est de faciliter la mise en coopération de l'élément de blocage avec la pièce de blocage, quand bien même la roue serait inclinée par rapport à la verticale selon un angle de carrossage, et donc quand bien même l'élément de blocage serait incliné par rapport à l'axe principal.

Un autre intérêt est de permettre un montage sans jeu du système de roue sur le cadre, malgré l'éventuel angle de carrossage selon lequel s'étend la roue.

Selon encore une autre variante avantageuse, la pièce de blocage comprend une bielle s'étendant radialement par rapport à l'élément tubulaire et un doigt de blocage s'étendant transversalement à ladite bielle, et l'élément de blocage comprend une portion d'armature du cadre du fauteuil, le doigt de blocage étant configuré pour venir en appui contre ladite portion d'armature.

### Brève description des dessins

L'invention sera mieux comprise à la lecture de la description qui suit de modes de réalisations de l'invention donnés à titre d'exemples non limitatifs, en référence aux dessins annexés, sur lesquels :
[Fig.1]la [Fig.1] montre un fauteuil roulant selon l'invention;
[Fig.2]la [Fig.2] est une vue en coupe d'un premier mode de réalisation d'un système de roue du fauteuil roulant de la [Fig.1];
[Fig.3] la [Fig.3] illustre un patin de freinage du système de roue de la [Fig.2];
[Fig.4]la [Fig.4] illustre le système de roue de la [Fig.2], le moyeu ayant été retiré;
[Fig.5]la [Fig.5] montre l'élément de guidage axial du système de roue de la [Fig.2];
[Fig.6]la [Fig.6] montre la coopération entre l'élément de guidage axial et l'organe de couplage du système de roue de la [Fig.2] ;
[Fig.7]la [Fig.7] est une vue en coupe d'un second mode de réalisation d'un système de roue selon l'invention ;
[Fig.8]la [Fig.8] montre la pièce de blocage du système de roue de la [Fig.2] ;
[Fig.9]la [Fig.9] est une vue en coupe illustrant le montage du système de roue de la [Fig.7] au cadre du fauteuil roulant;
[Fig.10]la [Fig.10] montre le dispositif de montage rapide du système de roue de la [Fig.7] ;
[Fig.11]la [Fig.11] montre la coopération entre l'élément de blocage et la pièce de blocage du système de roue de la [Fig.7] ;
[Fig.12]la [Fig.12] est une vue en perspective d'un troisième mode de réalisation d'un système de roue selon l'invention ;
[Fig.13]la [Fig.13] est une vue en coupe du système de roue de la [Fig.12];
[Fig.14]la [Fig.14] est une vue de côté du système de roue de la [Fig.12], avant la réalisation d'un premier freinage ; et
[Fig.15]la [Fig.15] une vue de côté du système de roue de la [Fig.12], lors du premier freinage.

### Description des modes de réalisation

L'invention porte sur un système de roue de fauteuil roulant ainsi que sur un fauteuil roulant comprenant un tel système de roue.

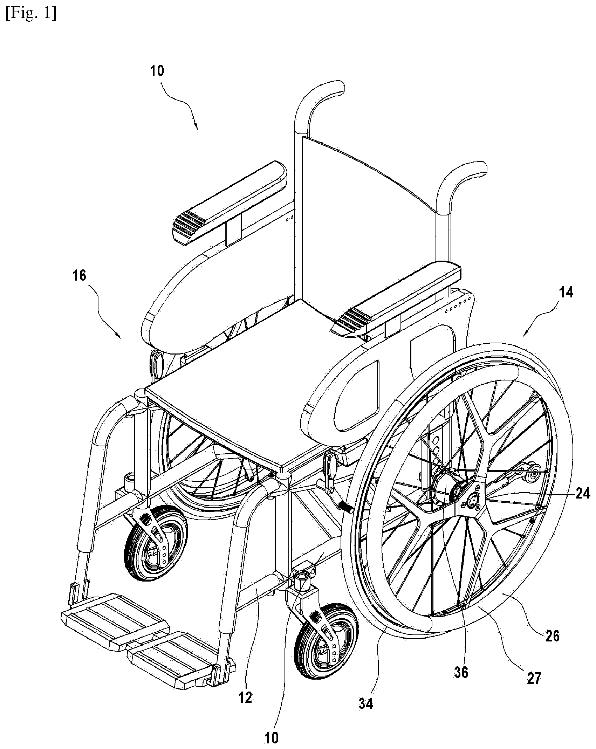

La [Fig.1] est une vue en perspective d'un fauteuil roulant **10** selon l'invention comprenant un cadre **12** auquel sont montés un premier système de roue **14** selon l'invention et un deuxième système de roue **16** selon l'invention. Les premier et deuxième systèmes de roue **14,16** étant sensiblement symétriques, seul le premier système de roue **14** sera décrit en détails par la suite. Le premier système de roue **14** comprend une roue **34,** visible en [Fig.1], comprenant un moyeu **36** relié à une jante par l'intermédiaire de rayon. Un pneu est monté sur la jante.

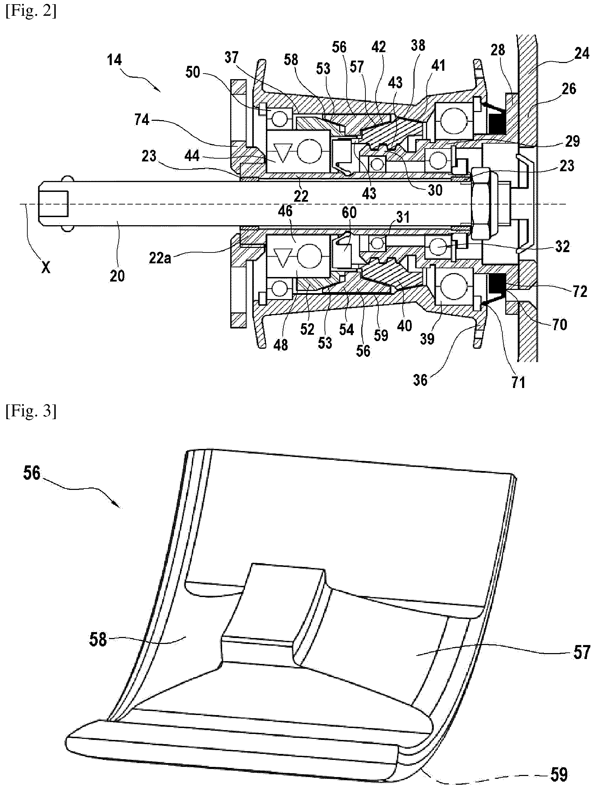

La [Fig.2] est une vue en coupe d'un premier mode de réalisation du premier système de roue **14** de la [Fig.1]. Tel qu'illustré sur cette [Fig.2], le premier système de roue **14** comprend un arbre principal **20** s'étendant selon un axe principal **X.** Le premier système de roue **14** comprend en outre un élément tubulaire **22** recevant l'arbre principal **20** et s'étendant selon ledit axe principal **X.** L'élément tubulaire **22** présente la forme d'un manchon. Il est creux et entoure l'arbre principal **20.** L'arbre principal **20** est engagé à l'intérieur de l'élément tubulaire **22** et est bloqué en translation axiale par rapport audit élément tubulaire par l'intermédiaire d'un écrou fixé à l'extrémité de l'arbre principal, dans un sens de déplacement axial.

Le système de roue comprend en outre deux bagues **23** emmanchés sur l'arbre principal et venant en butée sur des épaulements formés à l'intérieur de l'élément tubulaire **22.** L'élément tubulaire s'étend essentiellement à l'intérieur du moyeu **36.**

Le premier système de roue **14** comprend de plus une main courante **24** comprenant une portion d'actionnement circulaire **26** particulièrement visible en [Fig.1], et une portion d'extension **28,** visible en [Fig.2]. La portion d'extension **28** est solidaire de la portion d'actionnement circulaire **26,** par l'intermédiaire d'une vis dans cet exemple non limitatif.

Comme on peut le voir en [Fig.1], la portion d'actionnement circulaire **26** de la main courante **24** s'étend radialement par rapport à l'arbre principal **20** et à l'élément tubulaire **22.** La portion d'actionnement circulaire **26** comprend une poignée **27** de forme torique s'étendant en périphérie de ladite portion d'actionnement circulaire **26.**

La portion d'extension **28** de la main courante **24** s'étend axialement selon l'axe principal **X.** La portion d'extension **28** s'étend autour de l'élément tubulaire **22** et donc autour de l'arbre principal **20.** Elle est montée pivotante autour de l'axe principal **X** par rapport à l'élément tubulaire **22.** La portion d'extension présente une forme générale cylindrique. La portion d'extension **28** comprend une partie filetée **30** formée en une extrémité distale de la portion d'extension. La portion d'extension **28** comprend en outre une partie cylindrique **29** située entre ladite partie filetée **30** et la portion d'actionnement circulaire **26.**

La portion d'extension **28** de la main courante **24** est montée pivotante par rapport à l'élément tubulaire **22** par l'intermédiaire d'un premier palier **31** et d'un deuxième palier **32** situés à l'intérieur du moyeu **36.** Dans cet exemple non limitatif, les premier et deuxième paliers **31,32** sont des roulements à billes. Sans sortir du cadre de l'invention, ces paliers pourraient être des roulements à aiguilles. Le premier palier **31** est disposé entre l'élément tubulaire **22** et la partie filetée **30** de la portion d'extension **28.** Le deuxième palier **32** est disposé entre l'élément tubulaire **22** et la partie cylindrique **29** de la portion d'extension **28** de la main courante **24.**

Pour des raisons de clarté, seul le moyeu **36** de la roue **34** est représenté en [Fig.2]. Le moyeu **36** présente une face interne **37** présentant une surface conique interne **38.** Considérée dans le plan de coupe, cette surface conique interne **38** est inclinée par rapport à l'axe principal **X.** Le moyeu **36** est monté pivotant par rapport à la portion d'extension **28** de la main courante par l'intermédiaire d'un premier palier extérieur **39** disposé entre le moyeu **36** et ladite portion d'extension **28.** Ce premier palier extérieur **39** est ici un roulement à billes.

Le premier système de roue **14** comprend de plus un organe de couplage **40** situé à l'intérieur du moyeu **36.** L'organe de couplage est de forme générale cylindrique. L'organe de couplage **40** présente une portion filetée **43,** et plus précisément taraudée, engagée avec la partie filetée **30** de la portion d'extension **28** de la main courante **26.** L'organe de couplage **40** est en liaison hélicoïdale avec la portion d'extension **28** de la main courante. Aussi, un pivotement de la main courante **24** dans un premier sens de rotation entraine le déplacement en translation axiale de l'organe de couplage **40** selon l'axe principal **X** dans un premier sens de déplacement tandis qu'un pivotement de la main courante **24** dans un second sens de rotation, opposé au premier sens de rotation, entraine le déplacement en translation axiale de l'organe de couplage **40** dans un second sens de déplacement, opposé au premier sens de déplacement.

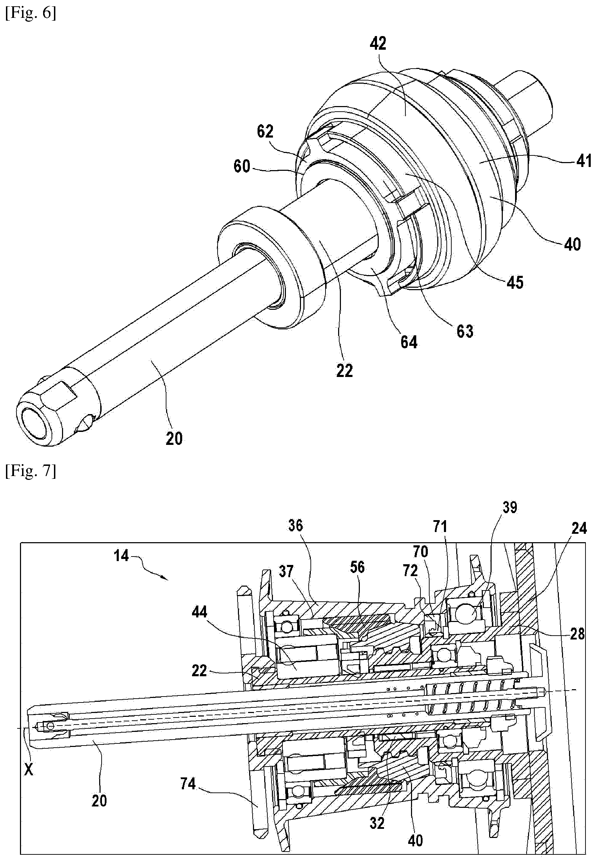

L'organe de couplage **40** comprend en outre une surface de couplage **41** conique et inclinée par rapport à l'axe principal **X** considérée dans le plan de coupe. Cette surface de couplage **41** est positionnée en regard de la surface conique interne **38** de la face interne **37** du moyeu **36.** L'organe de couplage **40** comprend en outre une rampe **42** également inclinée par rapport à l'axe principal. L'organe de couplage **40** comprend une pluralité de portions d'engagement **45,** ici quatre portions d'engagement **45,** s'étendant axialement. Ces portions d'engagement **45** sont illustrées en [Fig.6]. Ces portions d'engagement présentent la forme de cannelures s'étendant selon l'axe principal **X.**

Par la suite, le premier sens de rotation sera défini comme une rotation de la roue ou de la main courante dans un sens correspondant à un déplacement en marche avant du fauteuil roulant **10.** Le second sens de rotation sera défini comme une rotation de la roue ou de la main courante dans un sens correspondant à un freinage ou à un déplacement en marche arrière du fauteuil roulant **10.**

Le premier système de roue **14** comprend par ailleurs une roue libre **44** située à l'intérieur du moyeu **36,** c'est-à-dire dans le volume intérieur du moyeu. La roue libre **44** est ici une roue libre à cames. La roue libre **44** comprend une bague intérieure **46** et une bague extérieure **48.** La bague intérieure **46** est fixée à l'élément tubulaire **22.** La bague extérieure **48** est bloquée en rotation par rapport à la bague intérieure **46** dans le premier sens de rotation et libre en rotation par rapport à la bague intérieure **46** dans le second sens de rotation.

Le moyeu **36** est monté pivotant par rapport à la bague extérieure **48** de la roue libre **44** par l'intermédiaire d'un deuxième palier extérieur **50.** Dans cet exemple non limitatif, le deuxième palier extérieur **50** est un roulement à billes.

Le premier système de roue **14** comprend de plus un bouchon **52** s'étendant selon l'axe principal **X,** autour de l'élément tubulaire **22** et fixé à la bague extérieure **48** de la roue libre **44.** Le bouchon **52** présente un logement recevant la bague extérieure **48** de la roue libre **44.** Le bouchon **52** est situé dans le moyeu **36.** Le bouchon présente en outre une surface de bouchon conique **53** inclinée par rapport à l'axe principal **X.**

Le système de roue **14** comprend également un dispositif de freinage **54** comprenant deux patins de freinage **56** situés dans le moyeu **36.** Un patin de freinage **56** est illustré en [Fig.3]. Dans cet exemple non limitatif, les patins de freinage **56** présentent la forme d'une portion de cylindre décrivant un arc de cercle dont le périmètre est inférieur à un quart de cercle. Les patins de freinage **56** comprennent chacun une première surface conique **57,** une deuxième surface conique **58.** Considérées dans un plan de coupe longitudinal, les première et deuxième surfaces coniques **57,58** des patins de freinage sont inclinées par rapport à l'axe principal **X** et inclinées l'une par rapport à l'autre. Les patins de freinage **56** comprennent en outre une surface de freinage **59** formant une surface extérieure des patins de freinage **56.**

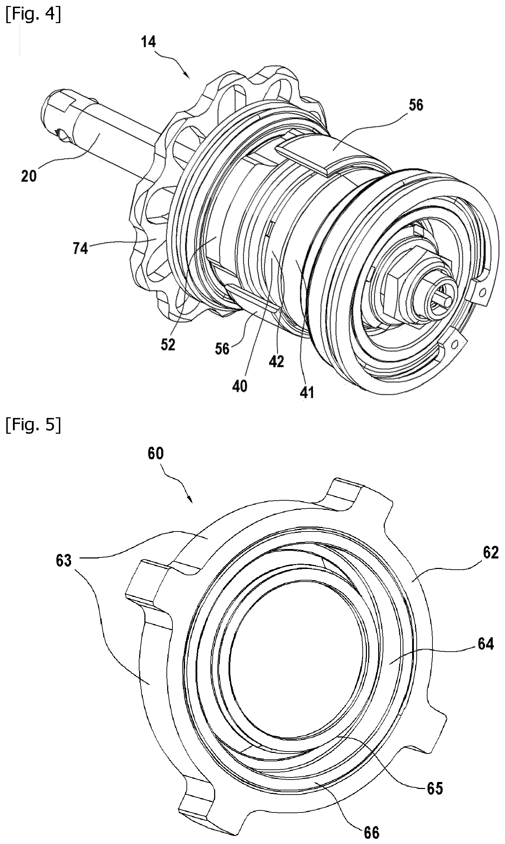

Tel qu'illustré sur la vue en perspective de la [Fig.4], dans laquelle la roue **34** et son moyeu **36** ont été retirés pour plus de clarté, Les patins de freinage **56** sont disposés entre le moyeu **36,** le bouchon **52** et l'organe de couplage **40.** Les deux patins de freinage **56** sont disposés de part et d'autre de l'élément tubulaire **22** et diamétralement opposés. Les premières surfaces coniques **57** des patins de freinage **56** sont disposées en regard de la rampe **42** de l'organe de couplage **40.** Les deuxième surfaces coniques **58** des patins de freinage **56** sont disposées en regard de la surface de bouchon conique **53** du bouchon **52.**

Par ailleurs, les patins de freinage **56** sont bloqués en rotation par rapport au bouchon **52** et donc par rapport à la bague extérieure **48** de la roue libre, ici quelle que soit la position de l'organe de couplage **40.** Les patins de freinage **56** et la bague extérieure de la roue libre sont donc couplés en rotation, par l'intermédiaire du bouchon **52.** Les patins de freinage **56** sont donc bloqués en rotation par rapport à la bague intérieure **46,** et donc par rapport à l'élément tubulaire **22,** dans le premier sens de rotation et libres en rotation par rapport à la bague intérieure **46,** et donc par rapport à l'élément tubulaire **22,** dans le second sens de rotation.

En se référant de nouveau à la [Fig.2], on constate que le premier système de roue **14** comprend par ailleurs un élément de guidage axial **60.** L'élément de guidage axial **60** est situé dans le moyeu **36.** Il présente une forme sensiblement cylindrique et est monté pivotant autour de l'élément tubulaire **22.** Dans cet exemple non limitatif, l'élément de guidage axial **60** est situé entre la portion d'extension **28** de la main courante **24** et la roue libre **44.** L'élément de guidage axial **60** s'étend en outre à l'intérieur du bouchon **52.**

Tel qu'illustré sur la vue en perspective de la [Fig.5], l'élément de guidage axial **60** comprend une portion de guidage axial **62** qui est circulaire et une portion de frottement **64** disposée à l'intérieur de la portion de guidage axial **62.** La portion de frottement **64** est déformable. Elle comprend un à lèvre, également appelé joint SPI, comprenant une lèvre intérieure souple **65** reliée à une bague périphérique **66** rigide. La lèvre intérieure souple **65** de la portion de frottement **64** est emmanchée sur l'élément tubulaire **22.** L'élément de guidage axial **60,** par l'intermédiaire de la portion de frottement **64,** est configuré pour exercer un léger couple de frottement sur ledit élément tubulaire **22.** Ce couple tend à s'opposer au pivotement dudit élément de guidage axial **60** par rapport à l'élément tubulaire **22.**

L'organe de couplage **40** est mobile en translation par rapport à l'élément de guidage axial **60** tout en étant bloqué en rotation par rapport à cet élément de guidage axial. Pour ce faire, tel qu'illustré en [Fig.6], la portion de guidage axial **62** de l'élément de guidage axial **60** comprend une pluralité de rainures **63,** ici quatre rainures **63,** configurée pour recevoir des portions d'engagement **45** de l'organe de couplage **40.**

L'élément de guidage axial **60** est configuré pour empêcher le pivotement de l'organe de couplage **40** par rapport à l'élément tubulaire **22** lorsque ledit organe de couplage **40** est soumis à un couple inférieur à un seuil prédéterminé. L'élément de guidage axial **60** est configuré pour autoriser le pivotement de l'organe de couplage **40** par rapport à l'élément tubulaire **22** lorsque ledit organe de couplage **40** est soumis à un couple supérieur audit seuil prédéterminé. La valeur de ce seuil prédéterminé est d'environ 0,2 newton mètre (N m).

L'engagement des portions d'engagement **45** de l'organe de couplage **40** dans les rainures **63** de l'élément de guidage axial **60** est illustré en [Fig.6].

Le premier système de roue **14** comprend également une pièce de frottement **70** disposée entre la portion d'extension **28** de la main courante **24** et le moyeu **36.** Dans l'exemple non limitatif de la [Fig.2], la pièce de frottement **70** comprend un joint à lèvre ayant une lèvre souple **71** en contact avec le moyeu **36** et une bague rigide **72** fixée à ladite portion d'extension **28** de la main courante. Dans cet exemple non limitatif, la pièce de frottement **70** est positionnée entre une extrémité axiale du moyeu **36** et la portion principale **26** de la main courante **24.**

La pièce de frottement est configurée pour générer un couple de frottement entre le moyeu et la portion d'extension **28** de la main courante, et donc entre la main courante **24** et la roue **34.** La pièce de frottement **70** permet d'entrainer la main courante **24** en rotation lors du pivotement de la du moyeu et donc de la roue **34,** grâce à quoi la main courante suit le déplacement en rotation de la roue. Ceci permet d'éviter que la main courante ne reste immobile lorsque la roue est entrainée en rotation, notamment dans le premier sens de rotation, réduisant l'amplitude de la poussée qu'il est nécessaire d'exercer sur la main courante pour entrainer en rotation la roue **34.**

La [Fig.7] illustre une variante du système de roue **14** selon l'invention, dans lequel la pièce de frottement **70** est située entre le premier roulement extérieur **39** et l'organe de couplage **40.** La lèvre souple **71** de la pièce de frottement **70** est ici en en contact avec la portion d'extension **28** tandis que la bague rigide **72** est fixée à la face intérieure **37** du moyeu **36.**

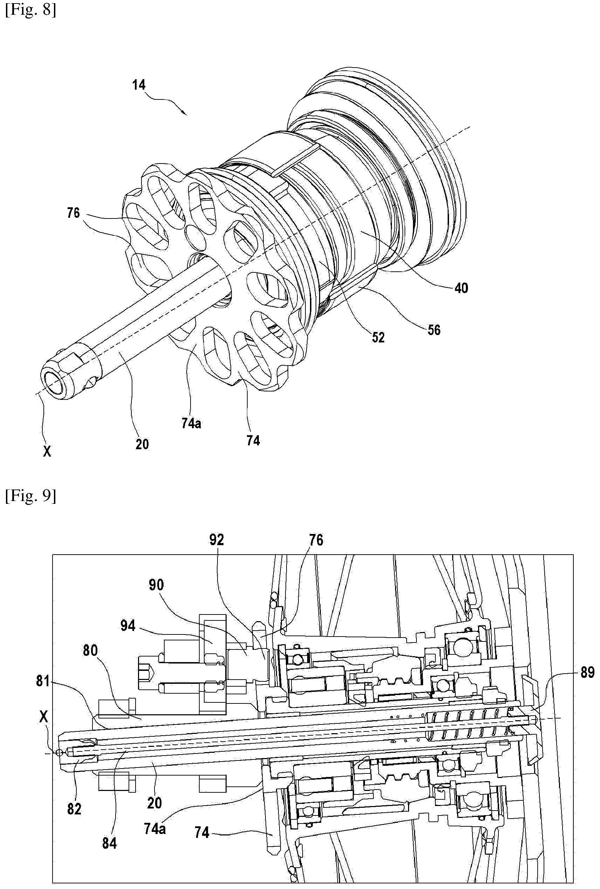

En se référant de nouveau au mode de réalisation de la [Fig.2], on constate que le premier système de roue **14** comprend en outre une pièce de blocage **74** solidaire de l'élément tubulaire **22.** Dans cet exemple non limitatif, la pièce de blocage **74** et l'élément tubulaire **22** sont deux pièces distinctes fixées entre elles. La pièce de blocage **74** est fixée à une extrémité **22a** de l'élément tubulaire **22,** opposée à la main courante **24.** La pièce de blocage est donc située à l'opposé de la main courante. La pièce de blocage **74** est configurée pour coopérer avec un élément de blocage du cadre pour le blocage en rotation de l'élément tubulaire **22** par rapport au cadre. Cette pièce de blocage **74** est illustrée sur la vue en perspective de la [Fig.8].

Cette pièce de blocage **74** présente sensiblement la forme d'un disque, ou encore la forme d'une marguerite. La pièce de blocage **74** s'étend radialement par rapport à l'élément tubulaire **22** et à l'axe principal **X.** Elle est en outre traversée par l'arbre principal **20.** La pièce de blocage **74** et la portion d'actionnement circulaire **26** de la main courante **24** sont disposées de part et d'autre du moyeu **36,** considérées axialement. Plusieurs orifices **76** sont ménagés dans la pièce de blocage en rotation **74** et disposés sur le pourtour d'un cercle centré sur l'axe principal **X,** ou encore sur le centre du disque. Ces orifices **76** sont de forme oblongue.

La pièce de blocage **74** comprend en outre une face latérale **74a** opposée à la main courante.

Pour monter le premier système de roue **14** au cadre **12** du fauteuil roulant **10,** l'arbre principal **20** est inséré dans un canon d'axe **80** solidaire du cadre **12** et présentant la forme d'un manchon, tel qu'illustré en [Fig.9]. Dans cet exemple non limitatif, le canon d'axe **80** présente un orifice traversant **81** s'étendant selon un axe de canon incliné par rapport à l'horizontale. Aussi, lorsque l'arbre principal **20** est inséré dans le canon d'axe **80,** l'axe principal **X** de l'arbre principal est confondu avec l'axe de canon et est également incliné par rapport à l'horizontale. Aussi, la roue **34** est inclinée par rapport à la verticale selon un angle de carrossage, facilitant notamment le passage des portes. Le diamètre de l'orifice traversant **81** est très légèrement supérieur au diamètre de l'arbre principal **20.**

Dans cet exemple non limitatif, l'arbre principal **20** comprend un dispositif de montage rapide **82** pour le montage, de manière amovible, du premier système de roue **14** par rapport audit cadre **12** du fauteuil roulant. Ce dispositif de montage rapide **82** comprend une tige axiale **84** montée coulissante à l'intérieur de l'arbre principal **20.** La tige axiale s'étend selon l'axe principal **X.**

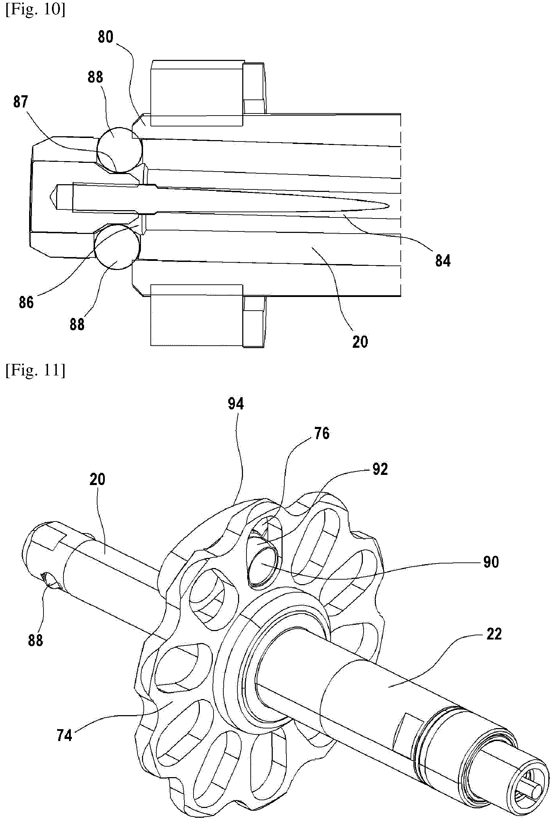

Tel qu'illustré en [Fig.10], la tige axiale **84** présente une première extrémité munie d'une portion de poussée **86** dont le diamètre est supérieur au diamètre de la tige axiale. Le dispositif de montage rapide **82** comprend en outre deux billes **88** logées dans des cavités **87** ménagées à l'extrémité de l'arbre principal **20** et mobiles en translation radialement à l'intérieur de ces cavités. La tige axiale **84** présente en outre une seconde extrémité, opposée à la première extrémité, et munie d'une portion de préhension **89** permettant de manipuler la tige axiale.

Pour monter le système de roue au cadre, l'arbre principal **20** est inséré dans l'orifice traversant **81** du canon d'axe **80** jusqu'à ce que la face latérale **74a** de la pièce de blocage **74** vienne en butée sur le canon d'axe **80.** L'élément tubulaire **22** est ainsi bloqué en translation axiale par rapport à l'arbre principal **20,** en direction du cadre **12.**

Les cavités **87** sont alors positionnées hors du canon d'axe **80,** tel qu'illustré en [Fig.10]. La portion de préhension **89** et les cavités **87** s'étendent alors de part et d'autre du canon d'axe. Les billes **88** s'étendent alors dans les cavités à l'intérieur de l'arbre principal, sans dépasser radialement depuis la surface extérieure de l'arbre principal.

Afin de bloquer l'arbre principal **20** en translation par rapport au canon d'axe **80,** la tige **84** est insérée dans l'arbre principal jusqu'à ce que la portion de poussée **86** pousse sur les billes **88,** de manière à les déplacer radialement au sein des cavités. Les billes **88** font alors saillie radialement depuis la surface extérieure de l'arbre principal **20** et viennent en butée sur le canon d'axe, empêchant le retrait de l'arbre principal hors du canon d'axe **80.** Dès lors, l'élément tubulaire **22** et donc l'arbre principal **20** sont bloqués en translation par rapport au canon d'axe **80** et donc au cadre **12.**

Afin de bloquer l'élément tubulaire **22** en rotation par rapport au cadre **12** du fauteuil roulant **10,** le cadre est muni d'un élément de blocage **90** constitué dans cet exemple non limitatif d'un pion de blocage **90** illustré en figures **9** et **11****.** Cet élément de blocage **90** comprend une portion sphérique **92.** Dans cet exemple non limitatif, tel qu'illustré en [Fig.11], l'élément de blocage **90** est fixé sur un connecteur **94** rapporté, lui-même fixé au cadre **12.** L'élément de blocage **90** est radialement distant de l'arbre principal **20** et de l'élément tubulaire **22.** L'élément de blocage **90** s'étend sensiblement horizontalement.

L'élément de blocage coopère avec un des orifices **76** oblongs de la pièce de blocage **74** bloquant ainsi la rotation de la pièce de blocage et donc de l'élément tubulaire **22** autour de l'axe principal **X.** Compte-tenu de la forme oblongue des orifices **76** de la pièce de blocage **74** et de la portion sphérique **92** de l'élément de blocage **90,** l'élément de blocage peut être mis aisément en coopération avec un des orifices, tout en limitant le jeu entre l'élément de blocage et la pièce de blocage et donc entre l'élément tubulaire et le cadre.

Nous allons maintenant détailler l'entrainement en marche avant, le freinage et l'entrainement en marche arrière d'une roue **34** du système de roue **14** du fauteuil roulant **10** selon l'invention, en référence à la [Fig.2].

Pour déplacer la roue **34** dans le premier sens de rotation, correspondant à un sens de rotation pour le déplacement en marche avant du fauteuil roulant **10,** l'utilisateur entraine la main courante **24** dans ce même premier sens de rotation, autour de l'axe principal **X.** La portion d'extension **28** de la main courante **24** pivote dans ce premier sens de rotation autour de l'axe principal **X.** L'organe de couplage **40,** dont la portion filetée **43** est engagée avec la partie filetée **30** de la portion d'extension **28,** est déplacé en translation axiale selon l'axe principal, dans un premier sens de déplacement. L'organe de couplage **40** est déplacé vers la surface conique interne **38** de la face interne **37** du moyeu **36,** jusqu'à amener ledit organe de couplage dans une première position.

Dans cette première position, la surface de couplage **41** de l'organe de couplage **40** vient en appui contre la surface conique interne **38** de la face interne **37** du moyeu **36,** de sorte que le déplacement axial de l'organe de couplage est interrompu. Dès lors, le moyeu **36** et la main courante **24** sont liés en rotation par l'intermédiaire de l'organe couplage **40.** Le pivotement de la main courante dans le premier sens de rotation entraine alors le déplacement de la roue dans ce même premier sens de rotation. Dans ce premier sens de rotation de la roue, la bague extérieure **48** de la roue libre **44** est bloquée en rotation par rapport à la bague intérieure **46.** Le moyeu **36** étant monté pivotant par rapport à la bague extérieure **48** de la roue libre, il peut toutefois pivoter dans ce premier sens de rotation, de sorte que la roue peut pivoter autour de l'axe principal **X** par rapport à l'élément tubulaire **22.**

Autrement dit, le pivotement de la main courante **24** dans le premier sens de rotation entraine le déplacement de la roue **34** dans ce même premier sens de rotation, correspondant à un déplacement vers l'avant du fauteuil **10.**

L'élément de guidage axial **60** permet d'empêcher la rotation de l'organe de couplage **40** lors de son déplacement axial, par exemple vers la première position ou encore vers la deuxième position, sans pour autant empêcher le pivotement de l'organe de couplage lorsqu'il est couplé au moyeu **36** ou au patin de freinage **56.**

Depuis cette première position, lorsque l'utilisateur ne fait plus pivoter la main courante **24,** l'organe de couplage **40** se déplace légèrement axialement dans un second sens de déplacement, opposé au premier sens de déplacement. L'organe de couplage **40** s'éloigne de la surface conique interne **38** du moyeu et se rapproche du patin de freinage **56.** Compte-tenu de ce léger déplacement, la surface de couplage **41** de l'organe de couplage **40** ne vient plus en contact contre la surface conique interne **38** de la face interne **37** du moyeu et le couplage entre la main courante **24** et la roue **34** est interrompu. La roue **34** poursuit toutefois librement son pivotement dans le premier sens de rotation, et le fauteuil continue d'avancer.

Afin de réaliser le freinage de la roue **34,** l'utilisateur fait pivoter la main courante **24** dans le second sens de rotation, opposé au premier sens de rotation. Ce second sens de rotation correspondant à un sens de freinage ou encore de déplacement en marche arrière pour le fauteuil.

L'organe de couplage **40,** dont la portion filetée **43** est engagée avec la partie filetée **30** de la portion d'extension **28** de la main courante est entrainé en translation par la portion d'extension de la main courante **24.** Il se déplace axialement dans le second sens de déplacement, vers les patins de freinage **56.** Dans ce second sens de déplacement, l'organe de couplage **40** est déplacé vers le bouchon **52** et la roue libre **44.**

L'organe de couplage **40** est déplacé jusqu'à atteindre la deuxième position, dans laquelle sa rampe **42** vient en contact avec la première surface conique **57** des patins de freinage **56.** La deuxième surface conique **58** des patins de freinage est pressée contre la surface de bouchon conique **53** du bouchon **52.** Les patins de freinage **56** sont alors pris en sandwich entre l'organe de couplage et le bouchon. L'organe de couplage **40** exerce alors un effort sur les patins de freinage **56** qui s'écartent et sont déplacés radialement vers le moyeu **36.** La surface de freinage **59** des patins de freinage vient alors au contact du moyeu, réalisant ainsi le freinage de la roue **34.**

Autrement dit, le pivotement de la main courante **24** dans le second sens de rotation entraine le freinage de la roue.

Lors du freinage, et jusqu'à son arrêt complet, la roue **34** continue de tourner dans le premier sens de rotation et la bague extérieure **48** de la roue libre est bloquée en rotation par rapport à la bague intérieure **46** de la roue libre. La roue peut toutefois pivoter compte-tenu de la liaison pivot entre le moyeu et la bague extérieure de la roue libre.

Lorsque la roue pivote **34** dans le premier sens de rotation et donc lors du freinage, le bouchon **52** et les patins de freinage **56** sont bloqués en rotation par rapport à l'élément tubulaire **22,** compte-tenu du blocage en rotation de la bague extérieure de la roue libre.

Pour faire pivoter la roue dans le second sens de rotation, correspondant à un déplacement en marche arrière du fauteuil, l'utilisateur fait pivoter la main courante **24** dans ce second sens de rotation. En conséquence, l'organe de couplage pousse les patins de freinage **56** contre le moyeu, générant là-encore un couplage entre la main courante et le moyeu **36.** Le moyeu **36** et donc la roue **34** sont entrainés en rotation dans le second sens de rotation. Dans ce second sens de rotation, la bague extérieure **48** de la roue libre **44** est libre en rotation par rapport à la bague intérieure **46.** Le pivotement du moyeu dans le second sens de rotation est autorisé par le couplage en rotation des patins de freinage **56** avec la bague extérieure de la roue libre, qui est elle-même libre en rotation par rapport à la bague intérieure de la roue libre dans ce second sens de rotation.

Dans cette deuxième position de l'organe de couplage **40,** le bouchon **52** est également couplé aux patins de freinage **56** et au moyeu **36.** Le bouchon et les patins de freinage pivotent également dans ce second sens de rotation.

Autrement dit, un déplacement de la main courante **24** dans ce second sens de rotation entraine le déplacement en rotation la roue **34** dans ce second sens de rotation, correspondant à un déplacement en marche arrière du fauteuil roulant **10.**

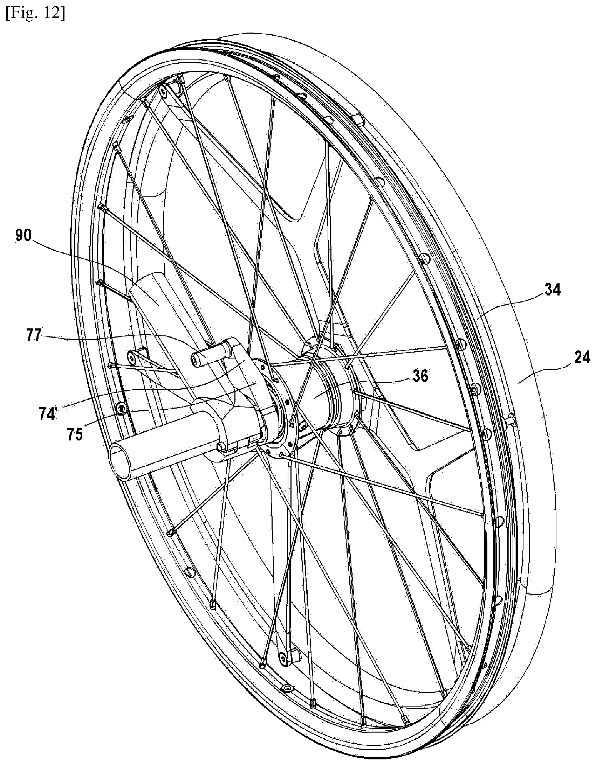

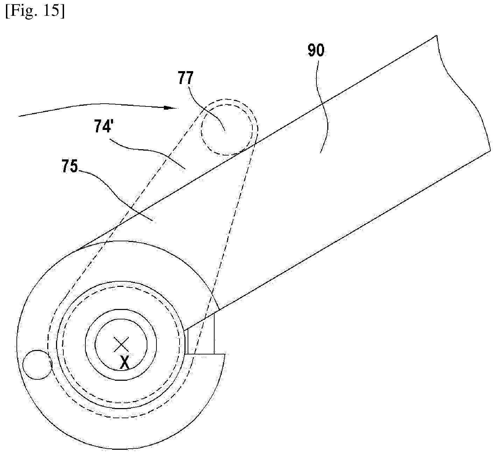

Les figures 12 à 15 illustrent un troisième mode de réalisation du système de roue **14** selon l'invention, se distinguant de celui des figures précédentes en ce qu'il comprend une variante de la pièce de blocage.

Sur la vue en perspective de la [Fig.12], on constate que dans ce mode de réalisation, la pièce de blocage **74'** comprend une bielle **75** solidaire de l'élément tubulaire **22** et s'étendant radialement par rapport audit élément tubulaire et à l'axe principal **X.** La pièce de blocage **74'** comprend en outre un doigt de blocage **77** fixé à la bielle **75** et s'étendant transversalement, de préférence perpendiculairement, à ladite bielle.

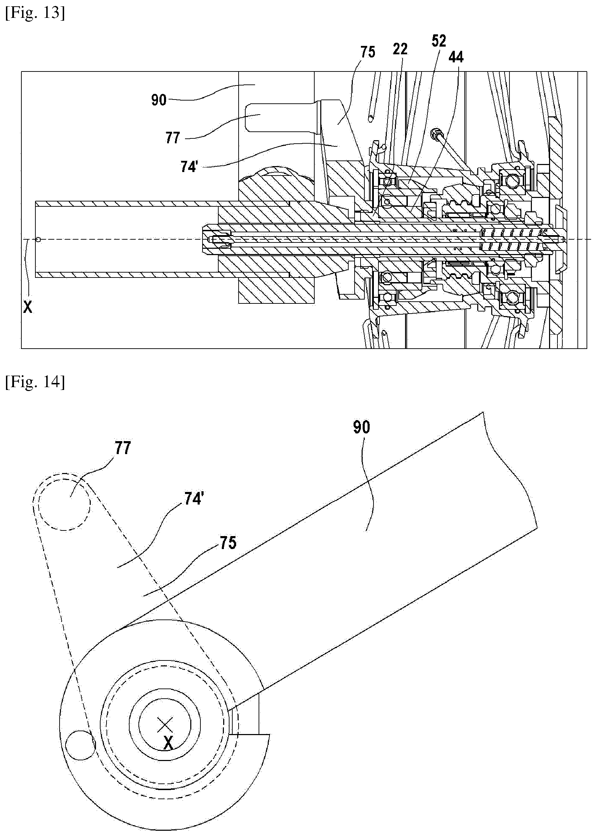

Comme on peut le voir sur la vue en coupe de la [Fig.13], le doigt de blocage **77** s'étend sensiblement parallèlement à l'axe principal **X.** Le doigt de blocage **77** s'étend depuis une extrémité distale de ladite bielle **75.**

Dans ce mode de réalisation, l'élément de blocage **90** du cadre **12** du fauteuil roulant est formé par une portion d'armature sensiblement tubulaire du cadre **12** du fauteuil roulant. Cet élément de blocage **90** s'étend transversalement à l'axe principal **X** et à l'élément tubulaire **22,** lorsque la roue **34** est montée au cadre.

La [Fig.14] montre le système de roue des figures **12** et **13** en vue de côté, lors d'une première utilisation, après le montage de la roue **34** sur le cadre **12** du fauteuil roulant **10.** Lors de cette première utilisation suivant le montage, la pièce de blocage **74'** et notamment le doigt de blocage **77** ne sont pas nécessairement au contact de l'élément de blocage **90** du cadre. Par conséquent la pièce de blocage **74'** et l'élément tubulaire **22** ne sont pas immédiatement bloqués en rotation. La pièce de blocage peut donc pivoter autour de l'axe principal **X,** dans les deux sens de rotation.

Lors du premier freinage, et tel qu'illustré en [Fig.14], la pièce de blocage **74'** et l'élément tubulaire **22** sont entrainés en rotation compte-tenu du pivotement de la roue autour de l'axe principal. Plus précisément, lors du freinage, la roue **34,** qui pivote selon un premier sens de rotation correspondant à un déplacement en marche avant du fauteuil, entraine la roue libre **44,** qui est bloquée, et donc l'élément tubulaire **22** dans ce même premier sens de rotation. Le doigt de blocage **77** de la pièce de blocage **74'** vient alors en contact avec l'élément de blocage **90** du cadre, de sorte que la pièce de blocage et l'élément tubulaire **22** sont alors bloqués en rotation selon ce premier sens de rotation. Ce blocage en rotation permet dès lors le freinage et l'entrainement de la roue dans un sens correspondant à la marche arrière. Les opérations de freinage et d'entrainement en marche avant et en marche arrière du fauteuil roulant **10** sont alors telles que décrites relativement aux précédents modes de réalisation. En particulier, la roue libre est entièrement bloquée en rotation dans le premier sens de rotation autour de l'axe principal **X,** tandis que la bague extérieure de la roue libre peut pivoter par rapport à la bague intérieure de la roue libre dans le second sens de rotation.

La pièce de blocage **74'** n'est pas bloquée en rotation dans un second sens de rotation, opposé au premier sens de rotation, mais ne tend toutefois pas à pivoter dans ledit second sens de rotation. La pièce de blocage **74'** tend donc à rester en appui contre l'élément de blocage **90** du cadre.

## Revendications

1. Système de roue (14,16) de fauteuil roulant (10) ayant un cadre (12), le système de roue comprenant :
- une roue (34) ayant un moyeu (36) présentant un axe principal (X), le moyeu comprenant une face interne (37) munie d'une surface conique interne (38);
- un arbre principal (20) configuré pour être monté au cadre du fauteuil roulant ;
- un élément tubulaire (22) s'étendant selon l'axe principal, l'arbre principal étant engagé dans ledit élément tubulaire;
- une main courante (24) montée pivotante autour de l'axe principal par rapport à l'élément tubulaire et couplée à la roue pour l'entrainement en rotation et le freinage de la roue, la main courante comprenant une portion d'actionnement circulaire (26) et une portion d'extension (28) s'étendant dans le moyeu, ladite portion d'extension entourant l'élément tubulaire et présentant une partie filetée (30);
- au moins un patin de freinage (56) situé dans le moyeu et comprenant une surface de freinage (59) et au moins une première surface conique (57);
- un organe de couplage (40) comprenant une surface de couplage (41), une rampe (42) et une portion filetée (43) engagée avec la partie filetée de la portion d'extension de la main courante pour déplacer axialement l'organe de couplage par rapport au moyeu, l'organe de couplage étant mobile en translation axiale entre au moins une première position dans laquelle sa surface de couplage est en appui contre la surface conique interne du moyeu, de sorte à lier en rotation la main courante et le moyeu, et une deuxième position dans laquelle la rampe de l'organe de couplage appuie contre la première surface conique du patin de freinage pour pousser radialement le patin de freinage contre la face interne du moyeu;
- une roue libre (44) comprenant une bague intérieure (46) fixe par rapport à l'élément tubulaire et une bague extérieure (48) bloquée en rotation par rapport à la bague intérieure dans un premier sens de rotation et libre en rotation par rapport à la bague intérieure dans un second sens de rotation opposé au premier sens de rotation, le moyeu de la roue étant monté pivotant par rapport à la bague extérieure de la roue libre, le patin de freinage étant lié en rotation avec la bague extérieure de la roue libre lorsque l'organe de couplage est dans la deuxième position ; et
- une pièce de blocage (74,74') solidaire de l'élément tubulaire et située à l'opposé de la main courante, la pièce de blocage étant configurée pour coopérer avec un élément de blocage (90) du cadre.

2. Système de roue selon la revendication 1, comprenant au moins un premier palier (31) situé à l'intérieur du moyeu (36) et disposé entre ladite partie filetée (30) de la portion d'extension (28) de la main courante (24) et ledit élément tubulaire (22).

3. Système de roue selon la revendication 2, dans lequel la portion d'extension (28) de la main courante (24) comprend une partie cylindrique (29) située entre la partie filetée (30) et la portion d'actionnement circulaire (26), le système de roue (14,16) comprenant en outre un deuxième palier (32) disposé entre ladite partie cylindrique de la portion d'extension et ledit élément tubulaire (22).

4. Système de roue selon l'une quelconque des revendications 1 à 3, comprenant en outre un palier extérieur (50) disposé entre la bague extérieure (48) de la roue libre (44) et le moyeu (36).

5. Système de roue selon l'une quelconque des revendications 1 à 4, dans lequel la pièce de blocage (74) présente la forme générale d'un disque, une pluralité d'orifices (76) étant ménagés dans le disque et disposés sur le pourtour d'un cercle centré sur le centre du disque.

6. Système de roue selon l'une quelconque des revendications 1 à 5, dans lequel ladite pièce de blocage (74,74') présente une face latérale (74a) configurée pour venir en butée sur une portion (80) du cadre (12) lorsque l'arbre principal (20) est monté audit cadre.

7. Système de roue selon l'une quelconque des revendications 1 à 6, comprenant en outre une pièce de frottement (70) disposée entre la main courante (24) et la roue (34) et configurée pour générer un couple de frottement entre ladite main courante et la roue lors du pivotement de ladite roue (34).

8. Système de roue selon la revendication 7, dans laquelle la pièce de frottement (70) est disposée entre la portion d'extension (28) de la main courante (24) et le moyeu (36).

9. Système de roue selon l'une quelconque des revendications 1 à 8, comprenant en outre un élément de guidage axial (60) monté pivotant autour de l'élément tubulaire (22), l'organe de couplage (40) étant mobile en translation selon l'axe principal (X) par rapport audit élément de guidage axial tout en étant bloqué en rotation autour de l'axe principal par rapport à cet élément de guidage axial, l'élément de guidage axial comprenant une portion de frottement (64) coopérant avec l'élément tubulaire et configurée pour exercer un couple de frottement sur ledit élément tubulaire.

10. Système de roue selon la revendication 9, dans lequel ladite portion de frottement (64) est déformable et est configurée pour empêcher le pivotement de l'organe de couplage (40) par rapport à l'élément tubulaire (22) lorsque ledit organe de couplage est soumis à un couple inférieur à un seuil prédéterminé.

11. Système de roue selon la revendication 9 ou 10, dans lequel ledit organe de couplage (40) comprend au moins une portion d'engagement (45) et dans lequel ledit élément de guidage axial (60) comprend au moins une rainure (63) configurée pour recevoir ladite portion d'engagement, ladite portion d'engagement étant configurée pour coulisser axialement à l'intérieur de ladite rainure.

12. Système de roue selon l'une quelconque des revendications 1 à 11, dans lequel l'arbre principal (20) comprend un dispositif de montage rapide (82) pour le montage, de manière amovible, du système de roue (14,16) par rapport audit cadre (12) du fauteuil roulant (10).

13. Fauteuil roulant (10) ayant un cadre (12) et comprenant au moins un système de roue (14,16) selon l'une quelconque des revendications 1 à 12, dans lequel ledit arbre principal (20) est monté au cadre du fauteuil roulant pour le montage du système de roue audit cadre, dans lequel le cadre comprend au moins un élément de blocage (90) et dans lequel la pièce de blocage (74) coopère avec ledit élément de blocage du cadre.

14. Fauteuil roulant selon la revendication 13, dans lequel la pièce de blocage (74) comprend au moins un orifice (76), et dans lequel l'élément de blocage (90) comprend un pion de blocage s'étendant radialement à distance de l'arbre principal (20) et coopérant avec ledit orifice de la pièce de blocage pour le blocage en rotation de l'élément tubulaire (22) par rapport au cadre (12).

15. Fauteuil roulant selon la revendication 14, dans lequel le pion de blocage (90) comprend une portion sphérique (92) s'engageant avec ledit au moins un orifice (76) de la pièce de blocage (74).

## Patentansprüche

1. Radsystem (14, 16) für einen Rollstuhl (10) mit einem Rahmen (12), wobei das Radsystem umfasst:
- ein Rad (34) mit einer Nabe (36), die eine Hauptachse (X) aufweist, wobei die Nabe eine innere Fläche (37) mit einer inneren Kegelfläche (38) umfasst;
- eine Hauptwelle (20), die dazu konfiguriert ist, am Rahmen des Rollstuhls angebracht zu werden;
- ein rohrförmiges Element (22), das sich gemäß der Hauptachse erstreckt, wobei die Hauptwelle in das rohrförmige Element eingreift;
- einen Greifreifen (24), der drehbar um die Hauptachse relativ zu dem rohrförmigen Element gelagert und mit dem Rad zum rotatorischen Antrieb und Bremsen des Rades gekoppelt ist, wobei der Greifreifen einen kreisförmigen Betätigungsabschnitt (26) und einen Verlängerungsabschnitt (28) umfasst, der sich in die Nabe erstreckt, wobei der Verlängerungsabschnitt das rohrförmige Element umgibt und einen Gewindeteil (30) aufweist;
- mindestens einen Bremsbelag (56), der sich in der Nabe befindet und eine Bremsfläche (59) sowie mindestens eine erste Kegelfläche (57) umfasst;
- ein Kupplungsorgan (40), das eine Kupplungsfläche (41), eine Rampe (42) und einen Gewindeteil (43) umfasst, der mit dem Gewindeteil des Verlängerungsabschnitts des Greifreifens im Eingriff steht, um das Kupplungsorgan relativ zu der Nabe zu verschieben, wobei das Kupplungsorgan axial zwischen mindestens einer ersten Position, in der seine Kupplungsfläche an der inneren Kegelfläche der Nabe anliegt, so dass der Greifreifen und die Nabe drehfest miteinander verbunden sind, und einer zweiten Position, in der die Rampe des Kupplungsorgans an der ersten Kegelfläche des Bremsbelags anliegt, um den Bremsbelag radial gegen die innere Fläche der Nabe zu drücken, axial translatorisch beweglich ist;
- ein Freilaufrad (44), das einen Innenring (46) umfasst, der relativ zu dem rohrförmigen Element fest ist, und einen Außenring (48), der in einer ersten Drehrichtung relativ zu dem Innenring rotatorisch blockiert und in einer zweiten, der ersten Drehrichtung entgegengesetzten Richtung relativ zu dem Innenring rotatorisch frei ist, wobei die Nabe des Rades relativ zu dem Außenring des Freilaufrades drehbar gelagert ist, wobei der Bremsbelag mit dem Außenring des Freilaufrades rotatorisch verbunden ist, wenn sich das Kupplungsorgan in der zweiten Position befindet; und
- ein Arretierteil (74, 74'), das mit dem rohrförmigen Element fest verbunden und sich dem Greifreifen gegenüberliegend befindet, wobei das Arretierteil dazu konfiguriert ist, mit einem Arretierelement (90) des Rahmens zusammenzuwirken.

2. Radsystem nach Anspruch 1, umfassend mindestens ein erstes Lager (31), das sich im Inneren der Nabe (36) befindet und zwischen dem Gewindeteil (30) des Verlängerungsabschnitts (28) des Greifreifens (24) und dem rohrförmigen Element (22) angeordnet ist.

3. Radsystem nach Anspruch 2, wobei der Verlängerungsabschnitt (28) des Greifreifens (24) einen zylindrischen Abschnitt (29) umfasst, der sich zwischen dem Gewindeteil (30) und dem kreisförmigen Betätigungsabschnitt (26) befindet, wobei das Radsystem (14, 16) ferner ein zweites Lager (32) umfasst, das zwischen dem zylindrischen Abschnitt des Verlängerungsabschnitts und dem rohrförmigen Element (22) angeordnet ist.

4. Radsystem nach einem der Ansprüche 1 bis 3, ferner umfassend ein äußeres Lager (50), das zwischen dem Außenring (48) des Freilaufrades (44) und der Nabe (36) angeordnet ist.

5. Radsystem nach einem der Ansprüche 1 bis 4, wobei das Arretierteil (74) im Wesentlichen scheibenförmig ausgebildet ist, wobei eine Vielzahl von Öffnungen (76) in der Scheibe vorgesehen und am Umfang eines Kreises angeordnet sind, der auf das Zentrum der Scheibe zentriert ist.

6. Radsystem nach einem der Ansprüche 1 bis 5, wobei das Arretierteil (74, 74') eine Seitenfläche (74a) aufweist, die dazu konfiguriert ist, an einem Abschnitt (80) des Rahmens (12) anzuschlagen, wenn die Hauptwelle (20) am Rahmen angebracht ist.

7. Radsystem nach einem der Ansprüche 1 bis 6, ferner umfassend ein Reibungsteil (70), das zwischen dem Greifreifen (24) und dem Rad (34) angeordnet und dazu konfiguriert ist, beim Drehen des Rades (34) ein Reibmoment zwischen dem Greifreifen und dem Rad zu erzeugen.

8. Radsystem nach Anspruch 7, wobei das Reibungsteil (70) zwischen dem Verlängerungsabschnitt (28) des Greifreifens (24) und der Nabe (36) angeordnet ist.

9. Radsystem nach einem der Ansprüche 1 bis 8, ferner umfassend ein axiales Führungselement (60), das drehbar um das rohrförmige Element (22) gelagert ist, wobei das Kupplungsorgan (40) gemäß der Hauptachse (X) relativ zu dem axialen Führungselement translatorisch verschiebbar ist, während es um die Hauptachse relativ zu diesem axialen Führungselement rotatorisch blockiert ist, wobei das axiale Führungselement einen Reibungsabschnitt (64) umfasst, der mit dem rohrförmigen Element zusammenwirkt und dazu konfiguriert ist, ein Reibmoment auf das rohrförmige Element auszuüben.

10. Radsystem nach Anspruch 9, wobei der Reibungsabschnitt (64) verformbar ist und dazu konfiguriert ist, das Drehen des Kupplungsorgans (40) relativ zu dem rohrförmigen Element (22) zu verhindern, wenn das Kupplungsorgan einem Drehmoment unterhalb eines vorbestimmten Schwellenwerts ausgesetzt ist.

11. Radsystem nach Anspruch 9 oder 10, wobei das Kupplungsorgan (40) mindestens einen Eingriffsabschnitt (45) umfasst und wobei das axiale Führungselement (60) mindestens eine Nut (63) umfasst, die zur Aufnahme des Eingriffsabschnitts ausgebildet ist, wobei der Eingriffsabschnitt dazu ausgebildet ist, innerhalb der Nut in axialer Richtung zu gleiten.

12. Radsystem nach einem der Ansprüche 1 bis 11, wobei die Hauptwelle (20) eine Schnellspannvorrichtung (82) zum lösbaren Anbringen des Radsystems (14, 16) relativ zu dem Rahmen (12) des Rollstuhls (10) umfasst.

13. Rollstuhl (10) mit einem Rahmen (12) und umfassend mindestens ein Radsystem (14, 16) nach einem der Ansprüche 1 bis 12, wobei die Hauptwelle (20) am Rahmen des Rollstuhls zum Anbringen des Radsystems an dem Rahmen angebracht ist, wobei der Rahmen mindestens ein Arretierelement (90) umfasst und wobei das Arretierteil (74) mit dem Arretierelement des Rahmens zusammenwirkt.

14. Rollstuhl nach Anspruch 13, wobei das Arretierteil (74) mindestens eine Öffnung (76) umfasst und wobei das Arretierelement (90) einen Verriegelungsstift umfasst, der sich radial beabstandet von der Hauptwelle (20) erstreckt und mit der Öffnung des Arretierteils zur Drehverriegelung des rohrförmigen Elements (22) relativ zum Rahmen (12) zusammenwirkt.

15. Rollstuhl nach Anspruch 14, wobei der Verriegelungsstift (90) einen kugeligen Abschnitt (92) umfasst, der mit der mindestens einen Öffnung (76) des Arretierteils (74) in Eingriff steht.

## Claims

1. Wheel system (14, 16) for a wheelchair having a frame (12), the wheel system comprising:
- a wheel (34) having a hub (36) having a main axis (X), the hub comprising an inner face (37) provided with an inner conical surface (38);
- a main shaft (20) configured to be mounted on the frame of the wheelchair;
- a tubular element (22) extending along the main axis, the main shaft being engaged in said tubular element;
- a hand-rim (24) mounted pivotally around the main axis relative to the tubular element and coupled to the wheel for driving in rotation and braking of the wheel, the hand-rim comprising a circular actuation portion (26) and an extension portion (28) extending in the hub, said extension portion surrounding the tubular element and having a threaded portion (30);
- at least one brake shoe (56) located in the hub and comprising a braking surface (59) and at least one first conical surface (57);
- a coupling member (40) comprising a coupling surface (41), a ramp (42) and a threaded portion (43) engaged with the threaded portion of the extension portion of the hand-rim to move the coupling member axially relative to the hub, the coupling member being movable in axial translation between at least one first position in which its coupling surface bears against the inner conical surface of the hub, so as to link the hand-rim and the hub in rotation, and a second position in which the ramp of the coupling member presses against the first conical surface of the brake shoe to radially push the brake shoe against the inner surface of the hub;
- a freewheel clutch (44) comprising an inner ring (46) fixed relative to the tubular element and an outer ring (48) blocked in rotation relative to the inner ring in a first rotation direction and free in rotation relative to the inner ring in a second rotation direction opposite to the first rotation direction, the hub of the wheel being mounted pivotally relative to the outer ring of the freewheel clutch, the brake shoe being linked in rotation with the outer ring of the freewheel clutch when the coupling member is in the second position; and
- a blocking part (74, 74') integral with the tubular element and located opposite the hand-rim, the blocking part being configured to cooperate with a blocking element (90) of the frame.

2. Wheel system according to claim 1, comprising at least one first bearing (31) located inside the hub (36) and arranged between said threaded portion (30) of the extension portion (28) of the hand-rim (24) and said tubular element (22).

3. Wheel system according to claim 2, wherein the extension portion (28) of the hand-rim (24) comprises a cylindrical portion (29) located between the threaded portion (30) and the circular actuation portion (26), the wheel system (14, 16) also comprising a second bearing (32) arranged between said cylindrical portion of the extension portion and said tubular element (22).

4. Wheel system according to any one of claims 1 to 3, also comprising an external bearing (50) arranged between the outer ring (48) of the freewheel clutch (44) and the hub (36).

5. Wheel system according to any one of claims 1 to 4, wherein the blocking part (74) has the general shape of a disk, a plurality of openings (76) being provided in the disk and arranged on the periphery of a circle centered on the center of the disk.

6. Wheel system according to any one of claims 1 to 5, wherein said blocking part (74, 74') has a lateral face (74a) configured to come into abutment on a portion (80) of the frame (12) when the main shaft (20) is mounted on said frame.

7. Wheel system according to any one of claims 1 to 6, also comprising a friction part (70) arranged between the hand-rim (24) and the wheel (34) and configured to generate a friction torque between said hand-rim and the wheel during the pivoting of said wheel (34).

8. Wheel system according to claim 7, wherein the friction part (70) is arranged between the extension portion (28) of the hand-rim (24) and the hub (36).

9. Wheel system according to any one of claims 1 to 8, also comprising an axial guide element (60) mounted pivotally around the tubular element (22), the coupling member (40) being movable in translation along the main axis (X) relative to said axial guide element while being blocked in rotation around the main axis relative to this axial guide element, the axial guide element comprising a friction portion (64) cooperating with the tubular element and configured to exert a friction torque on said tubular element.

10. Wheel system according to claim 9, wherein said friction portion (64) is deformable and is configured to prevent the pivoting of the coupling member (40) relative to the tubular element (22) when said coupling member is subjected to a torque less than a predetermined threshold.

11. Wheel system according to claim 9 or 10, wherein said coupling member (40) comprises at least one engagement portion (45) and wherein said axial guide element (60) comprises at least one groove (63) configured to receive said engagement portion, said engagement portion being configured to slide axially inside said groove.

12. Wheel system according to any one of claims 1 to 11, wherein the main shaft (20) comprises a quick-release mounting device (82) for removably mounting the wheel system (14, 16) relative to said frame (12) of the wheelchair (10).

13. Wheelchair (10) having a frame (12) and comprising at least one wheel system (14, 16) according to any one of claims 1 to 12, wherein said main shaft (20) is mounted to the frame of the wheelchair for the mounting of the wheel system to said frame, wherein the frame comprises at least one blocking member (90) and wherein the blocking part (74) cooperates with said blocking element of the frame.

14. Wheelchair according to claim 13, wherein the blocking part (74) comprises at least one opening (76), and wherein the blocking member (90) comprises a blocking pin extending radially at a distance from the main shaft (20) and cooperating with said opening of the blocking part for blocking the tubular element (22) in rotation relative to the frame (12).

15. Wheelchair according to claim 14, wherein the blocking pin (90) comprises a spherical portion (92) engaging with said at least one opening (76) in the blocking part (74).
